# NEUE EUROPÄISCHE PATENTSCHRIFT

(11) **EP 0 946 379 B2**
(45) Veröffentlichungstag und Bekanntmachung des Hinweises auf die Entscheidung über den Einspruch: **24.05.2006**
(45) Hinweis auf die Patenterteilung: 10.07.2002
(21) Anmeldenummer: 97954437.6
(22) Anmeldetag: 19.12.1997
(51) Int. Cl.: B60R 21/26, F42B 3/12

(54) **ANZÜNDELEMENT, INSBESONDERE FÜR PYROTECHNISCHE MISCHUNGEN**
IGNITER ELEMENT, IN PARTICULAR FOR PYROTECHNICAL MIXTURES
ELEMENT DE MISE A FEU, EN PARTICULIER POUR MELANGES PYROTECHNIQUES

(30) Priorität: 24.12.1996 DE 19654314
(43) Veröffentlichungstag der Anmeldung: 06.10.1999
(73) Patentinhaber: Dynamit Nobel GmbH Explosivstoff- und Systemtechnik, 53840 Troisdorf (DE)
(72) Erfinder: BRETFELD, Anton, D-90765 Fürth (DE); FRANK, Harald, D-90766 Fürth (DE); ZHANG, Jiang, D-90419 Nürnberg (DE)
(74) Vertreter: Manitz, Finsterwald & Partner GbR
(86) Internationale Anmeldenummer: PCT/EP1997/007163
(87) Internationale Veröffentlichungsnummer: WO 1998/028167

(56) Entgegenhaltungen:
- EP-A- 0 512 682
- EP-A- 0 704 347
- EP-B- 0 554 919
- WO-A-94/10528
- DE-A- 1 925 131
- DE-A- 1 925 134
- DE-A- 2 633 590
- GB-A- 2 298 477
- US-A- 3 746 214

## Beschreibung

Die Erfindung betrifft ein Anzündelement, insbesondere für pyrotechnische Mischungen.

Aus EP 0 618 424 A1 ist ein Anzündelement bekannt, das zwei Kontaktstifte aufweist, zwischen denen ein Widerstandselement, wie beispielsweise ein Metallschichtelement oder ein Glühdraht angeordnet ist An das Widerstandselement grenzt ein Anzündsatz an. Sobald den Kontaktstiften Strom zugeführt wird, entzündet sich der Anzündsatz aufgrund der hohen Temperatur des Widerstandselements. Solche Anzündelemente werden beispielsweise zum Zünden von Gasgeneratoren für den Einsatz bei Airbags oder Gurtstraffern verwendet.

Das Anzündelement weist ferner einen Trägerkörper auf. Hierbei handelt es sich beispielsweise um einen Kunststoffkörper, durch den die AuBengeometrie des Anzündelements festgelegt und die einzelnen Bautelle geschützt werden. Der Trägerkörper des Anzündelements wird beispielsweise in einer Halterung eines Airbags verschraubt oder eingebördeit Hierzu wird der Trägerkörper so in die Halterung eingeführt, dass die Wirkselte, an weicher der Anzündsatz des Anzündelements angeordnet ist, nach innen, beispielsweise in Richtung eines Gasgenerators zum Aufblasen eines Airbags, weist. Somit weist die Kontaktseite, an der über die Kontaktstifte Strom zufühtbar ist, nach außen. Zur Befestigung des Anzündelements wird ein Teil der Halterung umgebördelt, so dass das Anzündelement in der Halterung fixiert ist und nicht mehr in Richtung der Kontaktseite herausziehbar ist.

Sowohl das Einbördeln als auch das Verschrauben des Anzündelements in der Halterung ist mit hohem Montageaufwand verbunden, da stets sichergestellt sein muss, dass das Anzündelement mit der Halterung dichtabschließt. Auch bei hohen Gasdrücken auf der Wirkseite des Anzüncielements, die beispielsweise beim Aufblasen eines Airbags auftreten, darf kein Gas entweichen. Bei eingebördelten Armündelementen können Undichtigkeiten auftreten, da aufgrund der schlagartigen hohen Kräfte beim Aufblasen des Airbags die Einbördelung beschädigt werden kann.

Aus der GB-A-2.298.477 ist ein Gasgenerator bekannt, in dem ein Anzündelement über eine am Anzündelement angeformte Rastfeder eingesetzt ist. Die Rastfeder ist am Gehäuse des Anzündelements angeformt und rastet in eine Ausbuchtung des Gasgeneratorgehäuses ein.
Die EP 0 704 347 A1 beschreibt einen Gasgenerator dessen Anzündelement in einer äußeren Verdämmhülso eingebaut ist. Der Trägerkörper weist ein Verschlußelement mit einer umlaufenden Klinke auf. Diese Klinke rastet in eine im Bereich des äußeren Flansches angeordnete Stufe ein. Zur Abdichtung ist ein O-Ring eingelegt
Die US 3,746,214 offenbart ein Anzündelement mit einem Trägerkörper, der auf seiner Kontaktseite Drähte zum Zünden des Anzündsatzes aufweist. Auf dieser Kontaktseite sind am Trägerkörper flexible Beinchen angeordnet, die in Ausnehmungen des Gehäuses einschnappen
Die EP 0 554 919 B1 offenbart einen Gasgenerator mit einem Trägerkörper der in eine Halterung eingesetzt ist. Am Trägerkörper ist eine Rastfeder angeordnet, die in eine Ausnehmung des Gehäuses einrastet. Diese Rastfeder ist auf der Kontaktseite des Anzündelements angeornet.
Die DE-OS 19 25 131 offenbart ein Anzündelement, welches Ober Rastfedern im Gasgenerator verankert ist. Diese Rastfedern sind auf der Kontaktseite angeordnet.
Die DE 26 33 590 A1 offenbart ein Anzündelement, welches über Rastfedern im Gasgenerator verankert ist Diese Rastfedern sind auf der Kontaktseite angeordnet.

Aufgabe der Erfindung ist es, ein Anzündelement zu schaffen, das schnell und auf einfache Weise in einer Halterung montierbar ist and das Anzündelement auch bei hohen Gasdrücken auf der Wirkseite dicht mit der Halterung abschliesst.

Erfindungsgemäß ist dies durch die Merkmale des Anspruchs 1 gelöst.

Das erfindungsgemäße Anzündetement weist auf der Wirkseite eines Trägerkörpers einen pyrotechnischen Anzundsatz und auf der Kontaktseite des Trägerkörpers Kontakte auf. Zum Zünden des Anzündsatzes wird über die Kontakte einem Widerstandselement. Strom zugeführt. Der Trägerkörper ist in der Halterung, beispielsweise eines Airbags, eines Gurrstraffers oder ähnlichem gehalten. Hierzu weist erfindungsgemäB der Trägerkörper mindestens eine angeformte Rastfeder auf, die in eine Rastschulter der Halterung einrastet. Zur Montage des Anzündelements in der Halterung wird der Trägerkörper lediglich in die Halterung gesteckt, bis eine oder mehrere Rastfedern in an der Halterung vorgesehene Rastsehuttem einrasten. Die Montage eines Anzündeternents in der Halterung ist somit erheblich voreinfacht. Es sind keine aufwendigen Arbeitsschritte wie das Einbördeln sowie keine zusätzlichen Befestigungselemente wie Schrauben erforderlich.

Die Rastfeder ist auf der Wirkseite des Trägerkörpers angeordnet, so daß die Rastfeder zusätzlich die Dichtigkeit zwischen dem Anzündelement und der Halterung verbessert.

Um die Montierbarkeit zu vereinfachen, ist bevorzugt die Rastschulter in der Halterung umlaufend. Daher ist ein zylindrischer Trägerkörper in eine ebenfalls zylindrische Halterung In beliebiger Drehstellung einsetzbar. Vorzugsweise ist hierbei die Rastfeder ebenfalls umlaufend, so daß diese als Dichtlippe fungiert. Somit ist die Dichtigkeit zwischen dem Trägerkörper des Anzündelements und der Halterung weiter verbessert.

Erfindungsgemäß weist der Trägerkörper auf der Wirkseite, im Bereich der Rastfeder eine Ausnehmung auf. Nach dem Zünden des Anzündsatzes durch Zuführen von Strom zu den Kontakten auf der Kontaktseite des Trägerkörpers entsteht auf der Wirkseite und somit auch in der Ausnehmung ein Druck, welcher die Rastfeder gegen die Innenfläche der Halterung drückt. Bei steigendem Druck auf der Wirkseite wird der AnpreBdruck zwischen der Rastfeder und der Halterung erhöht Aufgrund der somit gewährleisteten Dichtigkeit kann ein zusätzlicher O-Ring oder eine andere zusätzliche Abdichtung häufig entfallen. Ist die Rastfeder sowie die innenfläche der Halterung so geformt, daß diese in unbelastetem Zustand aneinander anliegen, so ist schon bei geringern Druck eine ausrelchende Dichtigkeit gewährleistet.

Bei einer weiteren bevorzugten Ausführungsform sind die Innenabmessungen der Halterung im Bereich der Rastfe der kleiner als die AuBenabmessungen der unbelasteten Rastfeder, so daß die Rastfeder in der Halterung vorgespannt ist Dadurch wird die Dichtigkeit weiter verbessert.

Zur Aufnahme der beim Zünden des Anzündsatzes, wie beispielsweise beim Aufblasen eines Airbags, entstehenden Druckkräfte weist die Halterung bevorzugt eine steile Schulter auf, an der der Trägerkörper mit der Kontaktseite anliegt. Ein Verschieben des Anzündelemants in Richtung der Kontaktseite ist somit verhindert. Daher wirken die Druckkräfte nicht auf die Rastfeder und müssen nicht von dieser aufgenommen werden. Ein Beeinträchtigen der Dichtigkeit aufgrund des Gasdruckes kann somit im Gegensatz zu bekannten Anzündelementen, die mittels Schrauben oder Umbördeln in der Halterung gehalten sind, nicht auftreten. Vielmehr erhöht der Druck auf der Wirkseite des Anzündelements die Dichtigkeit zwischen diesem und der Halterung, da die Rastfeder bei zunehmendem Druck stärker gegen die Innenfläche der Halterung gedrückt wird.

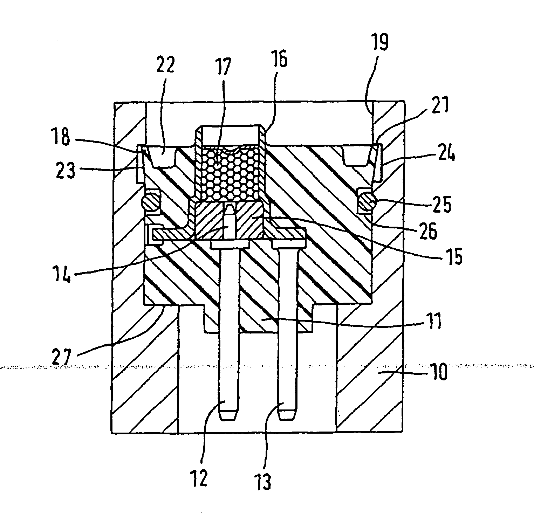

Nachfolgend wird die Erfindung anhand einer bevorzugten Ausführungsform unter Bezugnahme auf die einzige Figur der Zeichnung näher erläutert.

In der dargestellten schematischen Schnittansicht ist ein In einer Halterung 10 aufgenommenes Anzündelement dargestellt. In einem aus Kunststoff bestehenden im wesentlichen zylindrischen Trägerkörper 11 des Anzündelements sind auf der in derZeichnung nach unten weisenden Kontaktseite zwei Kontaktstifte 12,13 vorgesehen. Der Kontaktstift 12 weist einen Ansatz 14 auf, der mit einem als Widerstandselement dienenden Metallschichtelement 15 verbunden ist. Der Kontaktstift 13 ist fest mit einem metallischen Aufnahmeteil 16 verbunden, In welchem ein pyrotechnischer Anzündsatz 17 vorhanden ist. Zum Zünden des pyrotechnischen Anzündsatzes 17 wird den beiden Kontaktstiften 12,13 Strom zugeführt, wodurch das Metallschlchtelement 15 erhitzt wird. Aufgrund des Zündens des pyrotechnischen Anzündsatzes 17 wird auf der in der Zeichnung nach oben weisenden Wirkseite Druck aufgebaut.

Zur Aufnahme des Trägerkörpers 11 in der Halterung 10 weist der Trägerkörper eine angeformte umlaufende Rastfeder 18 auf, die in die Halterung 10 an einer umlaufenden Rastschutter 21 einrastet Der Trägerkörper 11 und die Rastfeder 18 sind einstückig aus Kunststoff gefertigt Zur Montage wird der Traserkörper 11 in der Zeichnung von oben in die Halterung 10 eingeführt Da der Außenducehcmesser der Rastfeder 18 größer ist, als der Durchmesser einer Bohrung 19 der Halterung 10, wird die Rastfeder 18 nach innen zusammengedrückt. Sobald die Rastfeder 18 auf Höhe der Rastschutter 21 ist, schnappt die Rastfeder 18 nach außen, da der Durchmesser der Nut 24 größer Ist ais der Durchmesser der Bohrung 19.

Des weiteren weist der Trägerkörper 11 an seiner Stirnseite eine ringförmige Ausnehmung 22 auf, die zur Wirkseite hin geöffnet ist. Die ringförmige Ausnehmung 22 grenzt direkt an die umlaufende Rastfeder 18 an. Der sich nach dem Zünden des pyrotechnischen AnZündsatzes 17 auf der Wirkseite des Anzündelements aufbauende Druck wirkt somit direkt auf die Rastfeder 18. Eine Außenfläche 23 der Rastfeder 18 wird somit gegen eine Innenfläche der Nut 24 in der Halterung 10 gedrückt. Daher ist die Dichtigkeit zwischen dem Trägerkörper 11 und der Halterung 10 gewährleistet

Zusätzlich ist zur Abdichtung ein O-Ring 25 vorgesehen, der in einer umlaufenden Nut 26 des Trägerkörpers 11 angeordnet ist. Der O-Ring 25 dient ebentalls zur Abdichtung zwischen der Halterung 10 und dem Trägerkörper 11.

Die Bohrung 19 endetan einersteiten Schulter 27. An der steilen Schulter 27 liegt die Kontataselte des Trägerkörpers 11 auf. Aufgrund der stellen Schulter 27 ist auch bei hohen Drücken auf der Wirkselte des Trägerkörpers 11 verhindert, daß das Anzündelement aus der Halterung 10 gedrückt wird. Der Abstand zwischen der Rastfeder 18 und der Kontaktseite des Trägerkörpers entspricht dem Abstand zwischen der Rastschulter 21 und der steilen Schutter 27, so daß die Rastfeder 18 keine axialen Kräfte aufnehmen muß.

Zur Montage des Trägerkörpers 11 in der Halterung 10 wird dieser in der Zeichnung von oben in die Halterung 10 eingeführt. Da der Außendurchmesser der umtaufenden Rastfeder 18 größer als der AuBendurchmesser des Trägerkörpers 11 ist, der dem Durchmesser der Bohrung 19 der Halterung 10 entspricht, wird die Rastfeder 18 nach innen zusammengedrückt, sobald die Rastfeder 18 in die Halterung 10 eingeführt wird. Der Trägerkörper 11 wird so weit in die Halterung 10 eingeführt bis die Kontaktseite des Trägerkörpers 11 auf der stellen Schulter 27 aufsitzt. Sobald der Trägerkörper an der steilen Schulter 27 anliegt, rastet die Rastfeder 18 hinter die Rastschulter 21 in die Nut 24 ein. Der TrägerKörper 11 ist somit nicht mehr in axialer Richtung in der Halterung 10 verschiebbar.

## Patentansprüche

1. Anzündelement mit einem Trägerkörper (11), der auf seiner Wirkseite einen pyrotechnischen Anzündsatz (17) und auf seiner Kontaktseite Kontakte (12, 13) zum Zünden des Anzündsatzes (17) aufweist, und mit einer den Trägerkörper (11) aufnehmenden Halterung (10) beispielsweise eines Airbags, eines Gurtstraffers oder ähnlichem, wobei der Trägerkörper (11) mindestens eine auf der Wirkseite des Trägerkörpers (11) angeformte Rastfeder (18) aufweist, die an einer Rastschulter (21) der Halterung (10) einrastet und der Trägerkörper (11) im Bereich der Rastfeder (18) eine zur Wirkseite geöffnete Ausnehmung (22) aufweist, so dass nach dem Zünden des Anzündsatzes (17) die Rastfeder (18) gegen eine Innenfläche der Halterung (10) gedrückt wird.

2. Anzündelement nach Anspruch 1, **dadurch gekennzeichnet, dass** die Rastschulter (21) umlaufend ist.

3. Anzündelement nach Anspruch 2, **dadurch gekennzeichnet, dass** der Trägerkörper (11) im wesentlichen zylindrisch und die Rastfeder (18) umlaufend ist.

4. Anzündelement nach einem der Ansprüche 1 bis 3, **dadurch gekennzeichnet, dass** der Trägerkörper (11) auf der Kontaktseite durch eine steile Schulter (27) in der Halterung (10) abgestützt ist

5. Anzündelement nach einem der Ansprüche 1 bis 4, **dadurch gekennzeichnet, dass** die Rastfeder (18) bei in die Halterung (10) eingesetztem Trägerkörper (11) vorgespannt ist

## Claims

1. An ignition element having a carrier body (11) which comprises, on its active side, a pyrotechnic ignition charge (17) and, on its contact side, contacts (12, 13) for the ignition of the ignition charge (17), and having a holder (10) accommodating the carrier body (11), for example a holder of an airbag, of a belt tensioner or the like,
wherein the carrier body (11) has at least one latch spring (18) which is formed at the active side of the carrier body (11) and which latches at a latch shoulder (21) of the holder (10) and wherein the carrier body (11) has a cut-out (22) open towards the active side in the region of the latch spring (18) such that, after the ignition of the ignition charge (17), the latch spring (18) is pressed toward an inner surface of the holder (10).

2. An ignition element in accordance with claim 1, **characterised in that** the latch shoulder (21) is peripheral.

3. An ignition element in accordance with claim 2, **characterised in that** the carrier body (11) is substantially cylindrical and the latch spring (18) is peripheral.

4. An ignition element in accordance with any one of the claims 1 to 3, **characterised in that** the carrier body (11) is supported on the contact side by a steep shoulder (27) in the holder (10).

5. An ignition element in accordance with any one of the claims 1 to 4, **characterised in that** the latch spring (18) is biased when the carrier body (11) is inserted into the holder (10).

## Revendications

1. Élément de mise à feu comportant un corps-support (11) qui porte, sur sa face active, une charge d'amorçage pyrotechnique (17) et, sur sa face de contact (12, 13), des contacts (12, 13) pour allumer la charge d'amorçage (17), et un moyen de fixation (10) pour recevoir le corps-support (11), par exemple d'un airbag, d'un tensionneur de ceinture ou similaire, dans lequel le corps-support (11) comporte au moins un ressort à enclenchement (18) conformé sur la face active du corps-support (11), qui s'enclenche contre un épaulement d'enclenchement (21) du moyen de fixation (10), et le corps-support (11) comporte, dans la région du ressort à enclenchement (18), un évidement (22) ouvert vers la face active, de sorte qu'après l'allumage de la charge d'amorçage (17) le ressort à enclenchement (18) est pressé contre une surface intérieure du moyen de fixation (10).

2. Élément de mise à feu selon la revendication 1, **caractérisé en ce que** l'épaulement d'enclenchement (21) est périphérique.

3. Élément de mise à feu selon la revendication 2, **caractérisé en ce que** le corps-support (11) et essentiellement cylindrique, et le ressort à enclenchement (18) est périphérique.

4. Élément de mise à feu selon l'une des revendications 1 à 3, **caractérisé en ce que** le corps-support (11) est soutenu sur la face de contact par un épaulement raide (27) dans le moyen de fixation (10).

5. Élément de mise à feu selon l'une des revendications 1 à 4, **caractérisé en ce que** le ressort à enclenchement (18) est précontraint lorsque le corps-support (11) est inséré dans le moyen de fixation (10).
